# EUROPEAN PATENT APPLICATION

(11) **EP 2 698 387 A1**
(43) Date of publication of application: **19.02.2014**
(21) Application number: 12770780.0
(22) Date of filing: 12.04.2012
(51) Int. Cl.: C08B 37/00, C08B 37/18

(54) **METHOD FOR PRODUCING INULIN AND OTHER FRUCTAN-CONTAINING PRODUCTS FROM JERUSALEM ARTICHOKE**

(30) Priority: 13.04.2011 RU 2011114593
(71) Applicant: Artemyev, Vladimir Dmitrievich, Volgograd 400131 (RU); Vasilieva, Yuliya Pavlovna, Volgograd 1400087 (RU)
(72) Inventor: Artemyev, Vladimir Dmitrievich, Volgograd 400131 (RU); Vasilieva, Yuliya Pavlovna, Volgograd 1400087 (RU)
(74) Representative: Pakidanska, Ivanka Slavcheva
(86) International application number: PCT/RU2012/000280
(87) International publication number: WO 2012/141617

(57) **Abstract**

The invention relates to nanotechnology for the production of biologically active substances and can be used for producing inulin-based pharmaceutical preparations, biologically active food additives and fructan-containing products as ingredients of functional foods. A purified inulin-containing solution is obtained from an aqueous suspension of Jerusalem artichoke powder upon extraction of fructosans, filtration to remove the solid phase and bleaching with perlite. Once the purified inulin-containing solution has been boiled down, it is separated by nanofiltration through a nanofilter with a retention threshold of 5000-6000 Da into a solution containing low molecular weight fructosans and a solution containing high molecular weight inulins with a weight of 5000-6000 Da and a chain length of 1.48 nanometres. A solution containing fructooligosaccharides with a molecular mass of less than 5000 Da is separated from the boiled-down inulin-containing solution by nanofiltration on ceramic semi-permeable membranes in order to obtain inulin with nanoproperties which is suitable for use in medicine and pharmaceuticals, after which a solution containing fructooligosaccahrides with a molecular mass of more than 6000 Da is also separated off. The solutions containing fructooligosaccaharides with a molecular mass of less than 5000 and more than 6000 Da respectively are used to produce fructooligosaccaharides. A glucose-fructose syrup is also produced from the boiled-down inulin-containing solution.

## Description

The invention relates to obtaining biologically active substances by means of nanotechnology and may be used for producing biologically active food additives, pharmaceutical preparations, based on functional food components of inulin and fructosan providing products as well as feed additives in agriculture.

Inulin is a carbohydrate of the polysaccharides group occurring as alternate products in tubers and roots of plants of the Asteraceae family. There are more than 36,000 different plants which provide natural vegetable fiber, that is, inulin. Among them, chicory (Cichorium intylis L.) and Jerusalem artichoke (Hlianthus tuberosus) contain inulin most of all. The inulin content in Jerusalem artichoke tubers reaches 10-12%. An inulin molecule is a chain of 30-36 fructose residues in a furanose form (Great Encyclopedia, 3-d edition, M., "Soviet Encyclopedia", v. 10, 1972, p. 344). The molecular mass of inulin is 5,000-6,000 Da (Da is a unit of molecular mass measure of high-molecular-weight compounds such as proteins, as well as humic asids). Inulin is a polyfructosan which can be obtained as an amorphous powder and in a form of crystals soluble readily in hot water and hardly in cold water. In addition to inulin, the tubers provide other frustosans with a degree of polymerization of PO >2 referred to oligosaccharides.

There is a method of obtaining inulin from Jerusalem artichoke tubers that includes its crystallization and drying (RF patent No 2,148,588 IPC S08V37/00, S08V37/18, publ. 10.05.2000). By the known method, Jerusalem artichoke tuber juice is prepared from the crushed tubers by means of physico-mechanical separation of solids soluble in water from fibrous substances insoluble in water. The juice then is heated to 80-85°C for 1-3 min and filtrated to remove the protein and colored substances. Here, the separation of tuber water-soluble substances from tuber water-insoluble fibrous substances is carried out no later than in 5-10 min after grinding the latter. Afterwards, the resulting filtrate is purified of natural inulin macromolecular substances with molecular mass greater than 6,500 Da and colloidally dispersed substances by ultrafiltration on hollow fibers. The condensate obtained is diluted with water and subjected to diafiltration. The permeation of ultrafiltration and that of diafiltration is combined and subjected to nanofiltration by feeding the combined solution through a semipermeable membrane with retention threshold of 4500 Da. In this case, inulin is accumulated in the concentrate, the low molecular mass and inorganic impurities passing into the ultrafiltrate. The inulin containing solution is decolorized by means of adding activated coal which interacts with the solution at a temperature of 50-60°C for 30-40 min. Afterwards, the coal is centrifugal separated. The decolorized solution is concentrated by boiling down, and inulin is crystallized of the resulting concetrated solution at a temperature of 4°C.

By the known method, inulin is prepared of juice taken from fresh-collected material (Jerusalem artichoke), however, the method does not allow the chemically pure inulin with a molecular mass of 5000-6000 Da suitable for use in pharmacology and medicine.

There is a method to obtain the inulin containing solution, described in RF patent No 2281291 IPC S08V 37/00, 37/18, publ. 10.08.2006. To produce the inulin containing solution by the known method, artichoke tubers are washed in a water tank, inspected, and cut into slices, the slices then dried. The dried slices are milled into flour to the fineness of grind of 50-60 microns. Jerusalem artichoke flour is stirred in hot water at a temperature of 50÷60°C to reach a smooth, lump-free consistency. Then, the resulting suspension with the component ratio of 1:4 is heated to 80÷85°C, and kept under stirring for 1,0÷1,5 hours to obtain fructosan extraction. After that, the suspension is cooled to 50°C and its solid phase (flakes) is separated from the liquid one through some filtration material, or by centrifugation. The filtrate is purified of dyes with active clearing charcoal mixed with the perlite in the ratio of 1:1. The treatment is conducted at a temperature of 50÷60°C for 0,5÷1,0 h. The exhaust coal and perlite is separated through a filtration material. To increase the benign inulin containing solution, the filtrate is purified of inorganic impurities and inulydes with molecular mass less than 4,000 Da by nanofiltration, passing through semipermeable membranes with particle retention threshold more than 4000 Da. Here, the phase of passing through the membrane, i.e. permeate, contains low molecular mass impurities, however, inulin and inulydes are accumulated in the delayed phase, i.e. concentrate. The inulin solution thus obtained is further used to prepare inulin, fructose-glucose syrup by means of the known technologies.

In the method described, the examples of preparing inulin containing solution are shown both based on the juice of pasty consistency obtained by grinding fresh-collected tubers of Jerusalem artichoke and based on preparing an aqueous suspension of the artichoke flour. However, by the method known, after clearing the inulin containg solution, the extraction of activated carbon of the solution presents a great difficulty as the carbon particles pass through the filter cloth and get into the filtrate. The solution remains strongly colored, which affects the color of the final product and, thus, the quality of the inulin obtained from inulin containg solution. Moreover, while implementing the known method, from the inulin containing solution with a molecular mass of 5,000-6,000 Da, it is impossible to obtain chemically pure inulin for its use in pharmacology and medicine, as nanofiltration is carried out on polymeric semipermeable membranes, which are limited by temperature and low use resource up to one year, because they are subjected to chemical degradation due to hydrolysis, oxidation, and microbial action.

There is a method known of obtaining inulin and other artichoke fructan containing products (Application No 2009111945 for the invention, publ. 10.10.2010). By the known method, the fresh-collected tubers of artichoke are washed in a water tank, inspected, and then cut into slices, the slices then dried. The dried slices are milled into flour to reach the grind fineness of 50-60 microns. The Jerusalem artichoke flour is stirred in hot water at a temperature of 50÷60°C to reach a smooth, lump-free consistency. Then, the resulting suspension in the component ratio of 1:4 is heated to 80÷85°C and kept under stirring for 1,0÷1,5 hours to extract fructosans. Afterwards, the suspension is cooled to a temperature of 50°C, and the solid phase (flakes) is separated from the liquid one through the filter material, or by centrifugation. The filtrate is purified of dyes by lightening active charcoal mixed with perlitation in ratio of 1:1. The waste coal and perlite is also filtered through the cloth, and the resulting solution is then nanofiltrated. This solution passes through polymeric semipermeable membranes with particle retention threshold of more than 4,000 Da in order to select high molecular inulins. Having obtained the concentrate with high molecular inulins and their presipitations in the subsequent crystallization, in order to extract frutosans, the non-recyclable waste is used, such as permeation due to nanofiltration, the solution of fructosans is obtained from the flakes in the hydro ratio of 1:1 by means of additional extraction and the mother liquor. The solutions are combined then and decolorized by activated carbon, which is added to the combined solution, followed by heating of the latter to a temperature of 50°C for 1 hour, stirring periodically. When the process of decolorizing is over, the vacuum filtration is carried out, passing the discolorized solution through the material with a layer of perlite. The decolorized solution of fructosans is vacuum evaporated at a residual pressure of 120 mm Hg and a temperature of 60°C, then it is dried in a spray dryer to obtain finely dispersed powder of fructosans (the content of fructosans is not less than 85%).

The given method for producing inulin and other fructan containing products from Jerusalem artichoke has a number of disadvantages. Due to the complicated configuration of lumpy artichoke tubers, some part of the soil is left on them, while washing the tubers in the water tank, the tubers get then into the technological production line of inulin and other fructan providing products. That is why the soil can be contained in the final product, reducing the quality of the latter. The process of cutting Jerusalem artichoke tubers is carried out with large slices. As artichoke tubers contain a large amount of sugary substances (including inulin), the process of drying is very difficult because the slices stick together, and they have to be constantly agitated. This requires some complicated equipment and increases energy consumption. Besides, the large slices darken due to oxidation, which requires more effort in bleaching the final products. Small yield of inulin into the solution determines the product to be grinding to a fineness of 50-60 microns. The preparation of the suspension is started at low temperatures of 50-60°C, so forced heating to 80-85°C is required in order to make the extraction. Here, the duration of extraction is reduced, which is insufficient for the maximum output of fructosans into the solution. When filtering the suspension through fabric filters, the solution is not sufficiently pure for producing inulin. As small pulp suspension is possible to infiltrate into the solution, the filters get clogged, and their constant replacing is required, which makes the process complicated as well. Furthermore, having lightened the inulin containing solution with activated carbon, which is separated from the solution through the filter cloth, fine particles of activated carbon penetrate into the filtrate, so the solution remains black. Due to this, the subsequent process of purification of such an inulin solution from inorganic impurities carried out by nanofiltration, becomes ineffective. Besides, the use of polymeric semipermeable membranes at nanofiltration does not provide the possibility of obtaining chemically pure inulin for pharmacological and medical use. By the known method of obtaining fructosans, their content in the final product (powder) has a yield of at least 85%, as the solution, delivered to the drying directly after the process of evaporation, is characterized with 25-30% of dry substances.

The object of the invention is to obtain inulin with nano-properties and to increase the qualitative and quantitative composition of the prepared fructan containing products.

The stated technical problem is solved due to the fact that the process of producing inulin and other fructan providing products from artichoke is conducted in the following way: the tubers of Jerusalem artichoke are washed first with sparging and their occasional stirring, kept in water for 2.5-3 hours, and then transmitted to washing mashine; the cutting of the tubers is produced into slices, in the form of chips, 1.0-1.5 mm thick; the milling of the dried product is carried out to the fineness of 20-30 microns; a suspension is prepared by mixing the ground product with water, gradually supplied at a temperature of 85-90°C to a reactor with steam jacket, until obtaining the component suspension in ratio of 1:(5-6); then the fructosan extraction is carried out for 1.5-2 hours; when the extraction is over, the pulp is separated from the solution by filtration in a flow-through centrifuge; then the inulin containing solution is a decolorized by passing it through a filter drum with a layer of perlite; the purified inulin containing solution is evaporated at a temperature of 60-70°C and a residual pressure of 120-150 mm Hg; then, the inulin containing solution, concentrated by evaporation, is subjected to nanofiltration, whereby the solution of low-molecular fructosans with a molecular mass up to 5,000 Da is first separated through the nanofilters with a retention threshold of 5,000-6,000 Da; then, the solution with high-molecular inulins above 6,000 Da is separated, wherein a solution containing inulin with a molecular mass of 5,000-6,000 Da is prepared from the concentrate; after that, the obtained inulin concentrate is fed through the cooler, in which the crystallization is carried out for 16-18 hours at 2-3°C; the precipitated crystals of inulin are stirred with mother liquor and fed to spray dryer to obtain an inulin powder.

The method for producing inulin and other fructan conaing products from artichoke enables to prepare fructo-oligosaccharides (FOS). While carrying out the nanofiltration of the evaporated inulin providing solution, the low molecular weight fructosan and the high molecular inulin solutions are combined. The combined solution is fed through the cooler to crystallization, which is carried out at 2-3°C for 16-18 hours. Here, the precipitated oligosaccharide crystals are mixed with the mother liquor and fed to spray dryer to produce a powder of FOS.

Additionally, fructose-glucose syrup is prepared by the method of obtaining inulin and other fructan providing products from artichoke. To do this, the evaporated solution is divided into portions. One of them is fed to nanofiltration to obtain inulin and fructo-oligosaccharides. The other part of the evaporated inulin containing solution is subjected to hydrolysis by organic or mineral acid at pH=1.5-2.0 at a temperature of 60-70°C. Thereafter, the hydrolyzate is evaporated to 5.5% aqueous solids, decolorized through the layer of perlite on a drum vacuum filter, and then the resulting decolorized solution is concentrated by evaporation again to the index of solid content not less than 70% in the final product.

In the claimed technical solution, the quality of the products is ensured by performing the following actions. First, the washing of tubers delivered from the field is more thoroughly carried out to avoid the particles of the soil entering the process line with tubers: they are preliminarily placed in a container with bubbling water, where they are kept under stirring for 1.5-2 hours. Second, the tubers are sliced not thicker than 1.5 mm in order to prevent the possibility of their oxidation and browning during their drying. Third, due to finer grinding of the dried slices with a fineness of 20-30 microns, a higher dispersion of Jerusalem artichoke flour is provided to prepare the aqueous suspension for fructazan extraction. Decolorization of the solution separated from the pulp is carried out through a drum filter with precoat layer of perlite. The method is as follows: the purified and evaporated inulin containing solution is put through nanofiltration of ceramic semipermeable membranes, in which the solution of fructo-oligosaccharides with a molecular weight less than 5,000 Da and the solution with molecular weight greater 6,000 Da are separated from each other in order to isolate the inulin with nanoproperties, which is suitable for use in medicine and pharmacy. In accordance with the claimed method the obtained solutions, containing fructo-oligosaccharides with a molecular weight less than 5,000 Da and greater 6,000 Da, are combined to obtain fructo-oligosaccharides (FOS), and the high molecular weight inulin is obtained from the solutions containing inulin. In the present method, the fructose-glucose syrup is obtained from the inulin solution evaporated additionally.

The method is implemented as follows. Jerusalem artichoke tubers are washed first with water and sparging in a container, stirring occasionally for 2.5-3 hours to separate the adhered soil, then, they are supplied into the washing machine. The washed away tubers are inspected for rejection of waste and recycling. Thereafter, the selected tubers are sliced to make chips with a thickness of 1.0-1.5 mm, the slices are then dried in a continuous dryer. The dried artichoke slices are milled into flour of 20-30 microns fineness. The flour, packed in Kraft bags, may be stored in a cool, dry place in a warehouse.

The containing inulin solution is prepared in a reactor with steam jacket, in which artichoke flour and hot water are mixed, the water at a temperature of 85-90°C being fed gradually to obtain suspension hydronic component with a ratio of 1:(5-6). Fructosans are extracted of the suspension liquor for 1.5-2 hours. When the process of extraction is over, a suspension of uniform consistency is obtained. This suspension is fed to a flow-through centrifuge to separate the pulp from the inulin containing solution. Then, the inulin containing solution is further purified and decolorized. To this, the solution is fed to the single-section vacuum drum filter consisting of a rotating drum at a speed of no more than 8 rot/min, a fabric filter with a precoat layer of perlite is stretched on it. The resulting suspended particle precipitation is left on the surface of perlite and removed continuously by staples. The decolorized solution in the apparatus with a stirrer, the lower slope, and steam jacket is subjected to vacuum evaporation at a temperature of 60-70°C and a residual pressure of 129-150 mm Hg.

To select the inulin with nanoproperties, suitable for use in in medicine and pharmacy, the evaporated inulin containing solution is separated through the semipermeable membranes from fructo-oligosaccharides having molecular mass less than 5000 Da. Then, the solution of fructo-oligosaccharides with molecular mass greater 6000 Da is separated in an analogous way. Afterwards, the inulin containing solution is fed through a cooler to crystasllization, provided with a jacket, where the solution is cooled to a temperature of 2-3°C kept for 16-18 hours till the inulin crystals fell out. The crystals presipitated are mixed with the mother liquer and through a lower slope are transferred by pumping to a spray dryer. When the product is prepared in the dryer, the high molecular inulin is weighed and packaged.

To select the fructo-oligosaccharides (FOS), the isolated by nanofiltration solutions containing fructo-oligosaccharides - the one with a molecular weight less than 5,000 Da and the one with a molecular weight greater 6,000 Da - are combined and flow through a conveyor cooler to a water jacketed crystallizer, where the solution is cooled to 2-3°C and held for 16-18 hours. When the crystals are presipitated, they are mixed with the mother liquer and dried in a spray dryer. The prepared powder of FOS is weighed and packaged.

To obtain the fructo-oligosaccharide syrup the evaporated inulin containing solution is divided into portions, one of which is fed to nanofiltration to obtain inulin and fructo-oligosaccharides. The other part is subjected to hydrolysis of organic or mineral acid at pH=1.5-2.0 and a temperature of 60-70°C. Thereafter, the hydrolyzate is boiled down to 5.5% content of aqueous solids, decolorized through a perlite in a drum vacuum filter, and then the resulting solution is decolorized, again evaporated to a solid content index of not less than 70% in the final syrup.

### Examples of the method

Jerusalem artichoke tubers are collected in the field in an amount of 3,200 kg, placed in a container with bubbling water, and kept under occasional stirring for 2 hours, then fed to a washer. Having cleaned and inspected the tubers weighing 3,000 kg, the waste being rejected, are cut into chips and fed to a conveyor dryer where they are dried in several stages at a temperature of 120-150°C to the state of dried product with moisture content not exceeding 6%. The dried product is milled to flour with a fineness of 20-30 microns. 780 kg of Jerusalem artichoke flour are obtained after their drying and milling. 100 kg of Jerusalem artichoke flour are placed in a reactor equipped with an agitator and a steam jacket, the gradual supply of 500 I of water are performed at a temperature of 85-90°C for a suspension component ratio of 1:5. A homogeneous suspension forms under constant stirring. The fructosan extraction forms in a liquor ratio suspension for 1.5 hours. When the extraction formation is over, the suspension is fed to a centrifuge, where separation containing suspended solids from a solution containing inulin and fructo-oligosaccharides occurs. In the output, 470.5 I of inulin containing solution are obtained, which provide fructo-oligosaccharides and 125.3 kg of pulp. The pulp is scrapped, and the solution at a temperature of 50-60°C is further subjected to bleaching and additional purification. The bleaching and further purification of the solution is performed in a vacuum drum filter at a speed of up to 8 rev/min. The applicable drum vacuum filter is equipped with a drum covered with a layer of perlite up to 60 mm thick, and with scrapers of 0.2-0.8 mm transverse motion. The resulting filtrate in an amount of 435.0 l and 14.2% solid content is fed into a vacuum evaporator M3C-320 (BH 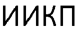 -**2**), where the solution is evaporated to a volume of 141.8 I at a temperature of 70°C and a residual pressure of 120-150 mm Hg. In this volume the solid content makes 42-45%.

To isolate the inulin with nanoproperties, the inulin containing solution in the volume of 141.8 liters, obtained by evaporation, flows through the dynamic nanofiltration membrane, ceramic membranes being used for this implementation. After interacting with ceramic nanofilters, the solution of low molecular fructosans with a molecular weight of less than 5,000 Da is first isolated. The remainder of the solution is sent back to the dynamic nanofiltration membrane. During the process the solution containing fructo-oligosaccharides of above 6,000 Da is separated. The nanofiltration results in the solution of inulin with molecular mass up to 6,000 Da. During the nanofiltration, the separated volume of inulin solution makes 42.5 liters, the inulin having a molecular mass of 5000-6000 Da and a chain length of 1.48 nanometers. After a through-cooler the solution is sent to a crystallizer equipped with water jacket and a lower release. Water is fed into the reactor jacket with a temperature of 2-3°C. The process of crystallization is carried out for 16-18 hours. Then, the precipitated inulin crystals and the mother liquor are stirred with a stirrer and fed to a spray dryer. After drying, the inulin powder in an amount of 9.21 kg is obtained with a high molecular mass of 5,000-6,000 Da and a chain, 1.48 nanometers in length, suitable for use in medicine and pharmaceutical industries. The benigh product makes 48.6%.

### Example of fructo-oligosaccharides (FOS)

Both the solution containing fructo-oligosaccharides above 6,000 Da and the solution of low molecular fructosans with a molecular mass less than 5,000 Da are selected by filtration of the evaporated inulin containing solution in the volume of 141,8 l, then combined, cooled in through-cooler, fed to a crystallizer, and held at a temperature of 2-3°C for 16-18 hours. After the process of fructo-oligosaccharides crystallization, the crystals and the mother liquor are mixed with a stirrer and dried in a spray dryer. The final product is the crystalline fructo-oligosaccharides (FOS) weighing 30.7 kg, suitable for use in the food industry. The good product makes 92%, the degree of polymerization is > 2.

### Example of fructose-glucose syrup (FGS).

In order to obtain glucose-fructose syrup (FGS), the entire volume of the evaporated inulin in the volume of 141.8 liters is used. It is fed to the reactor for hydrolysis. The volume of the reactor equipped with a stirrer, a bottom outlet, and heating jacket makes 1.6 m³. The hydrolysis of inulin and fructo-oligosaccharides is carried out at pH of 1.5-2.0, the level of which is set with citric acid at a temperature of 60-70°C. As monosaccharides and oligofructosans are accumulated in the solution, the process of hydrolysis is completed. The solution obtained in the volume of 141.0 liters is evaporated to the index of 5.5% solids content. The resulting sugar containing solution in the volume of 102.6 liters is further decolorized through the precoat layer of perlite in a drum vacuum filter. The bleached and transparent solution in the volume of about 98 liters is then finished (boiled) in a vacuum evaporator to the syrup content of dry matter not less than 70% after evaporation. Then the final syrup with a mass fraction of fructose and glucose not less than 70%, pH of 7.5-8.5, transparency of 1-2 cm is packed into containers. The product is suitable for use in the food industry and in the functional health food products.

When implementing the invention, the quality and the yield of the finished products improve, the energy costs and the process complexity being reduced by 2.5-3 times. The ready powder of inulin, due to the use of the claimed invention, has the propeties of chemically pure inulin, which enables its use as in medicine as in the pharmaceutical industry, as well as in food preparation for animals and birds.

## Claims

1. Method for producing inulin and other fructan containing products from Jerusalem artichoke, wherein tubers of artichoke are first washed, periodically stirred by sparging and kept in water for 2,5-3 hours, then the tubers are transferred to a washing machine, the tubers are cut into slices in the form of chips, 1.0-1.5 mm thick; a milling of the dried product is carried out to grinding fineness of 20-30 microns; then a suspension is prepared by mixing the ground product with water at a temperature of 85-90°C, gradually supplied to a reactor with steam jacket, until obtaining the component suspension in ratio of 1:(5-6); then an extrusion of fructosan is carried out for 1.5-2 hours; afterwards, the pulp is separated from the solution by filtration in flow centrifuges; then the inulin containing solution is decolorized by passing it through a drum filter with a layer of perlite; the purified inulin containing solution is evaporated at a temperature of 60-70°C and a residual pressure of 120-150 mm Hg; then the evaporated inulin containing solution is put through nanofiltration, during which a solution with low molecular fructosans having a molecular weight of up to 5000 Da is being first separated by flowing through nanofilters with a retention threshold of 5,000 Da; afterwards, a solution with high molecular inulins above 6,000 Da is separated by flowing through nanofilters with a threshold retention of 6,000 Da, here, out of the concentrate is obtained inulin solution with molecular mass of 5,000-6,000 Da; then, the final inulin concentrate is fed through the cooler to crystallization, which is carried out for 16-18 hours at a temperature of 2-3°C, the precipitated inulin crystals are mixed with the mother liquor and fed to spray drying to produce the powder of inulin.

2. Method according to claim 1, wherein after the nanofiltration of evaporated inulin containing solution, the solution with low molecular fructosans having a molecular weight of up to 5,000 Da is mixed with the solution of high molecular inulins having a molecular weight above 6,000 Da, then, the combined solution is fed through a cooler to crystallization, which is carried out for 16-18 hours at a temperature of 2-3°C, and the precipitated crystals of oligosaccharides are mixed with mother liquor and fed to a spray dryer to obtain powder of fructo-oligosaccharides.

3. Method according to claim 1, wherein the evaporated inulin containing solution is divided into portions, one of which is fed to nanofiltration to obtain inulin and fructo-oligosaccharides, and the other part is subjected to hydrolysis, carried out with an organic or mineral acid having pH=1.5-2.0 at a temperature of 60-70°C in order to obtain a fructose-glucose syrup, afterwards, hydrolyzate is concentrated to a solid content of 5.5%, decolorized through a layer of perlite in a drum vacuum filter, and then the resulting decolorized solution is again evaporated to a solid content index of not less than 70%.
